# EUROPEAN PATENT SPECIFICATION

(11) **EP 3 917 443 B1**
(45) Date of publication and mention of the grant of the patent: **12.02.2025**
(21) Application number: 18847255.9
(22) Date of filing: 06.12.2018
(51) Int. Cl.: A61C 1/18, A61C 15/04

(54) **DEVICE FOR CLEANING A SET OF TEETH**
VORRICHTUNG ZUR REINIGUNG EINES ZAHNSATZES
DISPOSITIF POUR NETTOYER UN ENSEMBLE DE DENTS

(43) Date of publication of application: 08.12.2021
(73) Proprietor: Lodde, Marius, 7606 ET Almelo (NL)
(72) Inventor: Lodde, Marius, 7606 ET Almelo (NL)
(74) Representative: Verhees, Godefridus Josephus Maria
(86) International application number: PCT/NL2018/050817
(87) International publication number: WO 2020/117040

(56) References cited:
- DE-U1- 20 020 766
- DE-U1- 202010 009 440
- JP-A- 2001 128 995
- US-A- 4 880 382
- US-A- 5 071 348

## Description

The invention relates to a device for cleaning a set of teeth, comprising a handle, a drive arranged on or in the handle, and a cleaning member connected movably to the handle and drivably to the drive, wherein the cleaning member extends substantially in line with a longitudinal axis of the handle, is connected releasably to the handle, and comprises a conical brush that is rotatably about this longitudinal axis of the handle. Such a teeth-cleaning device is known from US 5 071 348 A.

Most widespread are electrically driven toothbrushes, which are generally formed by a handle in which a small electric motor is arranged, and a brush arranged releasably thereon. The brush is set into a rotating or reciprocal movement by the drive.

Additionally also known are electrically driven flossing devices, which are often based on an electric toothbrush, wherein instead of the usual toothbrush a flossing member is arranged on the handle. A special category of driven flossing devices is formed by the so-called water flosser or "Waterpik^{®}", a flossing device on the basis of a high-pressure water jet. Such a water flosser is provided with a small, anatomically formed spray nozzle from which water can be sprayed between the teeth at high pressure.

Also known are electrically driven toothpicks or interdental brushes. Use is made here of small profiled cleaning members which are inserted between teeth and can there be moved reciprocally. These can be slender, elongate plastic bodies with a profile, although slender brushes can also be envisaged. Such brushes are generally conical, so that they have a point which can easily penetrate into an interdental space. The brush can be rotated or moved reciprocally by a drive.

Flossing and using toothpicks or interdental brushes are important cleaning techniques for the interdental spaces. Regular cleaning of these spaces can prevent the formation of dental plaque. Dental plaque is a significant source of early tooth decay, and is partially responsible for causing gum disease. It is therefore important for the interdental spaces to be cleaned regularly by using flossing thread, toothpicks or interdental brushes.

A problem which occurs in driven toothpicks or interdental brushes is that the toothpick or interdental brush can become stuck in the narrow interdental space between two teeth. When the toothpick or interdental brush is driven, a blocking of the movement thereof can result in great forces on the teeth, which can result in damage, injury or in any case pain. In addition, these forces can result in damage to the cleaning member or even to the drive.

The invention is defined by the appended claims.

The invention now has for its object to provide a teeth-cleaning device of the above described type, wherein said problems do not occur, or at least do so to lesser extent.

According to a first aspect of the invention, this is achieved in that:
- the device further comprises a protection against overloading arranged between the cleaning member and the drive, and
- the drive is continuously rotatable in two directions and controlled by a switch.

For an optimal cleaning action it is preferred for the cleaning member to extend substantially in line with the longitudinal axis of the handle and to comprise a conical brush and to be continuously rotatable in two directions.

JP 2001 128995 A discloses a device for cleaning the interdental space between teeth having a different shaped brush (not conical) and in which the brush is not in line with the handle.

When the cleaning member is connected releasably to the handle, it can be replaced with a new one after use in simple manner.

According to an embodiment of the device, the overload protection can comprise a slipping coupling. A slipping coupling can prevent high loads in reliable manner, and can take a structurally fairly simple form.

The slipping coupling is preferably a magnetic coupling. Because use is made of magnetic attractive force, the different parts of the coupling can have smooth surfaces, which is structurally particularly simple. There is furthermore no risk of the coupling parts unintentionally becoming caught on each other. The release of the coupling parts is predictable and reproducible.

When the slipping coupling comprises a magnet connected drivably to the drive and a follower of magnetizable material connected to the cleaning member, the cleaning member, which will become worn after repeated use, can be replaced without the (relatively expensive) magnet having to be discarded.

Although it is possible in principle to envisage that the magnet is an electromagnet which is energized when the drive is switched on, it is preferred that the magnet is a permanent magnet. The drive need thus not be dimensioned to supply the magnetic force.

A relatively firm attachment, also when the volume of the magnet is small, is then achieved when the magnet comprises neodymium. Neodymium is a very strongly magnetic material.

In order to be able to use the handle in combination with different cleaning systems it can be divisible at the position of the magnetic coupling.

A cleaning member can here comprise a flossing thread for a combined dental cleaning, and a pulley around which the flossing thread is wound can be received in or on the handle. The releasable attachment is thus realized in simple manner.

In order to be able to wind the flossing thread around the pulley quickly and effortlessly, the pulley is preferably connected to the drive shaft.

In this case the drive shaft is advantageously rotatable in two directions, so that the flossing thread can also be unwound from the pulley again in order to detach the cleaning member.

The pulley, which has a relatively large surface area, can be manufactured at least partially from a magnetizable material and can function as a follower. A relatively strong attachment to the magnet is thus achieved.

In that case the cleaning member and the pulley can be detachable as a whole.

According to another aspect of the invention, a teeth-cleaning device is provided wherein the drive comprises an electric motor and a rechargeable battery. Such a device can in principle be used anywhere.

When the rechargeable battery is connected to a USB connection on the handle, it can be charged by the same charger as mobile phones, tablets and other electronics, so that a separate charger is not necessary.

For co-action with modern chargers it is then preferred for the USB connection to be a mini USB connection.

In addition or instead, the battery can be inductively chargeable and the handle can be provided with a central recess in its end surface. The device can thus be used in combination with a standard inductive charger for an electric toothbrush, which is provided with a base with an upright pin.

The invention is now elucidated on the basis of an embodiment, wherein reference is made to the accompanying drawing in which corresponding components have the same reference numerals, and in which:

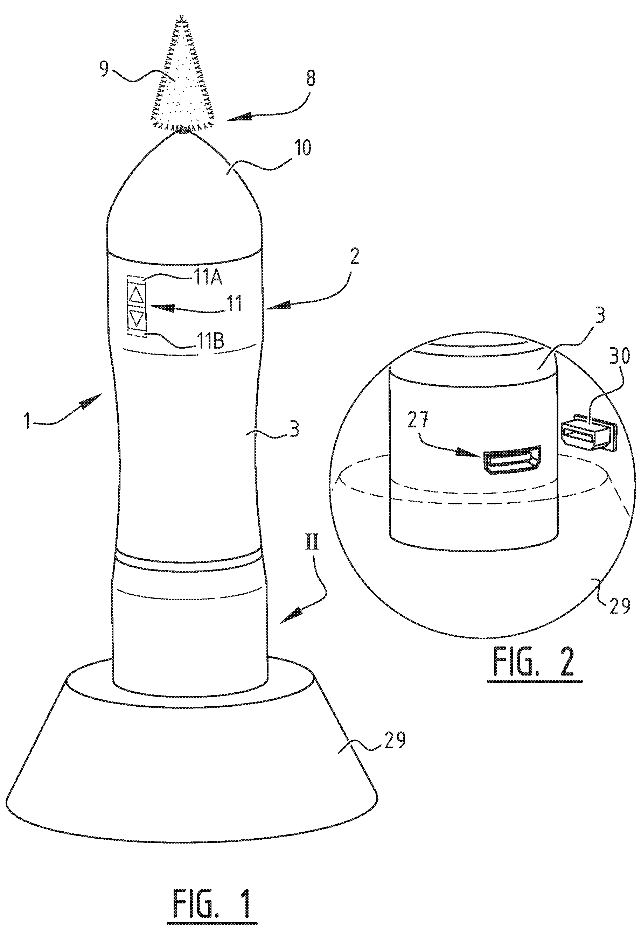

Fig. 1 is a perspective view of a teeth-cleaning device according to the invention,
Fig. 2 is a perspective detail view on enlarged scale as according to arrow II in Fig. 1,

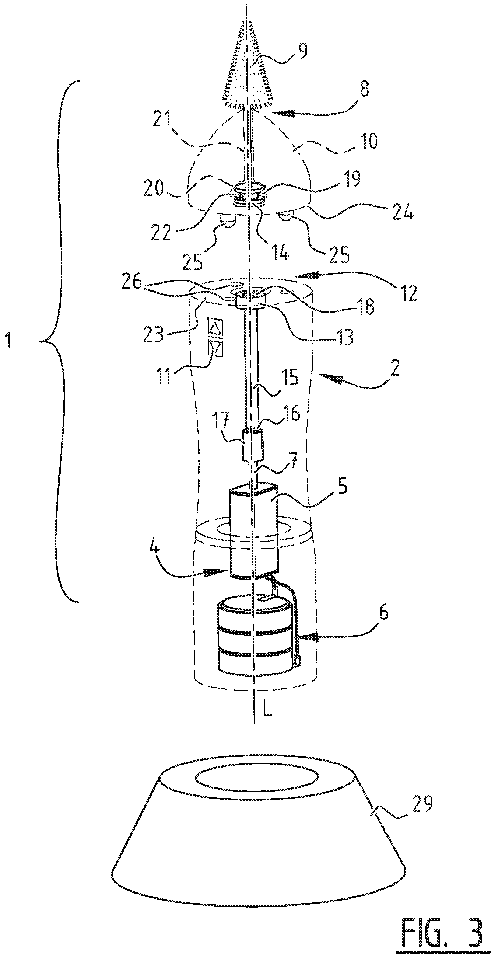

Fig. 3 is a perspective view with exploded parts of the device of Fig. 1 , wherein the housing of the handle has been omitted for the sake of clarity,
Fig. 4 is a longitudinal section through a part of an alternative embodiment of the device, and
Fig. 5 is a schematic longitudinal section through yet another embodiment of the device.

A device 1 for cleaning a set of teeth comprises a handle 2, here taking the form of a substantially cylindrical body with a rounded top 10. Cylindrical body 2 forms a housing 3 in which a drive 4 is received. In the shown example this drive 4 comprises an electric motor 5 which is powered by a battery 6 and which has an output drive shaft 7. A switch 11 is provided for switching drive 4 on and off. Drive 4 is operational in two directions, and switch 11 can thus be controlled, from the shown neutral position in which drive 4 is not operational, in two directions indicated with arrows. The two operative positions 11A, 11B of switch 11 are shown in broken lines. A cleaning member 8, in the shown example in the form of a conical (interdental) brush 9, is connected movably to handle 2. In the shown example cleaning member 8 is mounted rotatably in handle 2. Cleaning member 8 extends substantially in line with a longitudinal axis L of handle 2, and is rotatable about this longitudinal axis L.

Cleaning member 8 is connected drivably to drive 4. Cleaning member 8 can thus be set into rotation by switching on drive 4, and then be inserted into interdental spaces between the teeth so as to clean them and thus prevent the formation of dental plaque.

In order to prevent the risk of injury or damage when interdental brush 9 of cleaning member 8 unexpectedly experiences a lot of resistance and as it were"jams", a protection against overloading is arranged between cleaning member 8 and drive 4. In the shown example this overload protection comprises a slipping coupling 12.

Although there are different ways of embodying a slipping coupling, in the shown example a magnetic coupling has been opted for. In the shown example this magnetic slipping coupling 12 comprises a magnet 13 which is connected drivably to drive 4 and a follower 14 of magnetizable material which is connected to cleaning member 8. In the shown embodiment magnet 13 is annular and is arranged on a shaft part 15, for instance of plastic, which is provided on its end lying opposite magnet 13 with screw thread 16. This screw thread forms a connection to a bushing 17 with internal screw thread which is fastened onto drive shaft 7. Magnet 13 is fixed relative to shaft 15 by means of a screw 18.

In the shown example magnet 13 is a permanent magnet, for instance a neodymium magnet. As stated, follower 14 is manufactured from a magnetizable material, for instance iron.

Follower 14 here takes the form of a pulley with an upper and lower disc, and a groove 19 formed therebetween, and a central infeed opening for a thread, which debouches in groove 19. The pulley is mounted rotatably in a space 20 in an upper part 10 of handle 2. From this space 20, a channel 21 extends to the outer end of handle 2. Wound in the groove 19 of the pulley is an outer end of a flossing thread 22, the other end of which is guided through channel 21 and is attached to the conical (interdental) brush 9 of cleaning member 8. By winding the flossing thread 22 tightly onto the pulley the interdental brush 9 is pulled against the outer end of handle 2, whereby cleaning member 8 is firmly attached.

When drive 4 is switched on, drive shaft 7 and the shaft part 15 attached thereto rotate, and thereby thus also magnet 13. Follower 14 co-rotates with magnet 13, and this rotation is transmitted via shaft part 15 to interdental brush 9. When this interdental brush 9 experiences an unexpectedly great resistance, follower 14 will lag relative to rotating magnet 13, and thus begin to slip. This prevents overloading.

Handgrip 2 is divided at the position of slipping coupling 12. Co-acting coupling means are formed in an upper surface 23 of the cylindrical part of handle 2 and in a lower surface 24 of upper part 10. In the shown example these coupling means can take the form of pins 25 which protrude from lower surface 24 and which can be received in openings 26 in upper surface 23. Owing to these co-acting pins 25 and openings 26, upper part 10 is connected non-rotatably to the cylindrical part of handle 2. In addition, the two parts are drawn together by the magnetic force between magnet 13 and follower 14. A user can pull upper part 10 off the cylindrical part and for instance exchange it for another upper part with a different type of cleaning member.

In addition, a user can exchange cleaning member 8 by reversing the rotation direction of drive 4 using switch 11. Flossing thread 22 is then unwound from the pulley again, after which cleaning member 8 can be detached from the handle. In order to mount a new cleaning member the flossing thread 22 connected thereto once again has to be guided through channel 21 and to the pulley, and carried via the infeed opening into groove 19. By operating switch 11 the drive 4 can then be started and flossing thread 22 can be wound around the pulley.

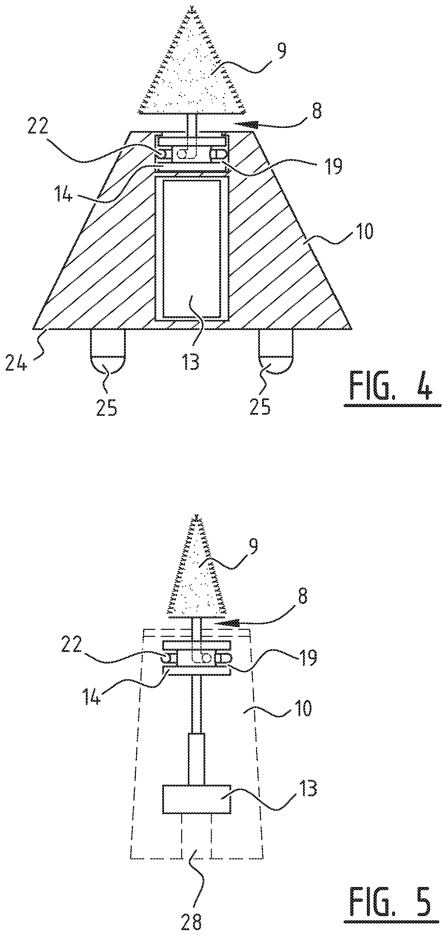

Fig. 4 shows an alternative embodiment of upper part 10, wherein a cylindrical neodymium magnet 13 is received in this upper part, which has the form of a truncated cone. Just as in the first embodiment, this magnet co-acts with a follower 14 of magnetizable material, once again in the form of a pulley. In this example the (interdental) brush 9 is pulled substantially directly against pulley 14 via a short piece of flossing thread 22. In this embodiment the drive shaft and the extension piece placed thereon can be made wholly of metal or plastic, as long as it ends close to upper surface 23 in a part of magnetizable material. Two magnetic connections, to follower 14 on the one hand and drive shaft 7 and its extension piece 15 on the other, are thus formed on either side of magnet 13.

Fig. 5 shows an embodiment which is suitable to be connected to the handle of a conventional electric toothbrush. Device 1 is here for this purpose in effect limited to the upper part 10, in which a recess 28 is arranged on the underside. Into this recess 28 can be inserted the output shaft of a conventional electric toothbrush, which then moves the magnet 13 along with it. The magnet in turn moves along with it the folio wer/pulley 14, to which interdental brush 9 is attached by means of the flossing thread 22 wound around the pulley.

In contrast to conventional electric toothbrushes, which are generally provided with a battery which can be charged via either a direct connection to the mains electricity or an inductive connection to a base which is connected to the mains electricity, in the device according to the invention a power supply by means of a USB connection 27 is provided for. This can be a conventional USB connection, as shown, but also a mini USB connection. This has the advantage that the device can be powered by equipment which is generally already available for the purpose of powering for instance mobile phones, tablets and the like. The base 29 can hereby moreover take a very simple form, because no electrical components need be incorporated therein. Because device 1 will usually be used in wet spaces, the USB connection can be sealed watertightly by a rubber cap 30.

Although the invention has been elucidated above on the basis of a number of examples, it will be apparent that it is not limited thereto and can be varied in many ways. The slipping coupling could thus be embodied other than with magnets, for instance by a mechanical connection on the basis of friction and elasticity. The manner in which the attachment of the cleaning member to the handle is realized can also be adapted, and the principle of power supply via a USB connection is not limited to the type of teeth-cleaning device described here but can be applied in all manner of electrical appliances, particularly travel appliances.

The scope of the invention is therefore defined solely by the following claims.

## Claims

1. Device (1) for cleaning a set of teeth, comprising:
- a handle (2),
- a drive (4) arranged on or in the handle (2), and
- a cleaning member (8) connected movably to the handle (2) and drivably to the drive (4),
wherein the cleaning member (8):
- extends substantially in line with a longitudinal axis (L) of the handle (2),
- is connected releasably to the handle (2), and
- comprises a conical brush (9) that is rotatably about this longitudinal axis (L) of the handle (2),
**characterized in that**:
- the device further comprises a protection against overloading arranged between the cleaning member (8) and the drive (4), and
- the drive (4) is continuously rotatable in two directions and controlled by a switch (11).

2. Device as claimed in claim 1, **characterized in that** the overload protection comprises a slipping coupling (12).

3. Device as claimed in claim 2, **characterized in that** the slipping coupling (12) is a magnetic coupling.

4. Device as claimed in claim 3, **characterized in that** the slipping coupling (12) comprises a magnet (13) connected drivably to the drive (4) and a follower (14) of magnetizable material connected to the cleaning member (8).

5. Device as claimed in claim 4, **characterized in that** the magnet (13) is a permanent magnet.

6. Device as claimed in claim 4 or 5, **characterized in that** the magnet (13) is connected to the drive shaft (7).

7. Device as claimed in any one of the preceding claims, **characterized in that** the cleaning member (8) comprises a flossing thread (22) and a pulley around which the flossing thread (22) is wound is received in or on the handle (2).

8. Device as claimed in claim 7, **characterized in that** the pulley is connected to the drive shaft (7).

9. Device as claimed in claims 7 or 8, **characterized in that** the pulley is manufactured at least partially from a magnetizable material and functions as a follower (14).

10. Device as claimed in claim 9, **characterized in that** the cleaning member (8) and the follower (14) are detachable as a whole.

11. Device as claimed in any one of the foregoing claims, **characterized in that** the drive (4) comprises an electric motor (5) and a rechargeable battery (6).

12. Device as claimed in claim 11, **characterized in that** the rechargeable battery (6) is connected to a USB connection (27) on the handle (2).

## Patentansprüche

1. Gerät (1) zum Reinigen eines Gebisses, umfassend:
- einen Griff (2),
- einen Antrieb (4), der an oder in dem Griff (2) angeordnet ist, und
- ein Reinigungselement (8), das beweglich mit dem Griff (2) verbunden und antreibbar mit dem Antrieb (4) verbunden ist,
wobei das Reinigungselement (8):
- sich im Wesentlichen in einer Linie mit einer Längsachse (L) des Griffs (2) erstreckt,
- lösbar mit dem Griff (2) verbunden ist, und
- eine kegelförmige Bürste (9) umfasst, die um diese Längsachse (L) des Griffs (2) drehbar ist,
**dadurch gekennzeichnet, dass**:
- das Gerät außerdem einen Überlastungsschutz umfasst, der zwischen dem Reinigungselement (8) und dem Antrieb (4) angeordnet ist, und
- der Antrieb (4) in zwei Richtungen kontinuierlich drehbar und durch einen Schalter (11) steuerbar ist.

2. Gerät nach Anspruch 1, **dadurch gekennzeichnet, dass** der Überlastungsschutz eine Rutschkupplung (12) umfasst.

3. Vorrichtung nach Anspruch 2, **dadurch gekennzeichnet, dass** die Rutschkupplung (12) eine Magnetkupplung ist.

4. Vorrichtung nach Anspruch 3, **dadurch gekennzeichnet, dass** die Rutschkupplung (12) einen Magneten (13) umfasst, der antriebsmäßig mit dem Antrieb (4) verbunden ist, und einen mit dem Reinigungselement (8) verbundenen Mitnehmer (14) aus magnetisierbarem Material.

5. Vorrichtung nach Anspruch 4, **dadurch gekennzeichnet, dass** der Magnet (13) ein Permanentmagnet ist.

6. Vorrichtung nach Anspruch 4 oder 5, **dadurch gekennzeichnet, dass** der Magnet (13) mit der Antriebswelle (7) verbunden ist.

7. Vorrichtung nach einem der vorhergehenden Ansprüche, **dadurch gekennzeichnet, dass** das Reinigungselement (8) einen Zahnseidefaden (22) umfasst und eine Riemenscheibe, um die der Zahnseidefaden (22) gewickelt ist, im oder am Griff (2) aufgenommen ist.

8. Vorrichtung nach Anspruch 7, **dadurch gekennzeichnet, dass** die Riemenscheibe mit der Antriebswelle (7) verbunden ist.

9. Vorrichtung nach Anspruch 7 oder 8, **dadurch gekennzeichnet, dass** die Riemenscheibe zumindest teilweise aus einem magnetisierbaren Material hergestellt ist und als Mitnehmer (14) fungiert.

10. Vorrichtung nach Anspruch 9, **dadurch gekennzeichnet, dass** das Reinigungselement (8) und der Mitnehmer (14) als Ganzes abnehmbar sind.

11. Vorrichtung nach einem der vorhergehenden Ansprüche, **dadurch gekennzeichnet, dass** der Antrieb (4) einen Elektromotor (5) und einen Akku (6) umfasst.

12. Vorrichtung nach Anspruch 11, **dadurch gekennzeichnet, dass** der Akku (6) an einen USB-Anschluss (27) am Griff (2) angeschlossen ist.

## Revendications

1. Dispositif (1) de nettoyage d'une dentition, comprenant :
- un manche (2),
- un entraînement (4) disposé sur ou dans le manche (2), et
- un organe de nettoyage (8) relié de manière mobile au manche (2) et pouvant être entraîné par l'entraînement (4),
dans lequel l'organe de nettoyage (8) :
- s'étend sensiblement en ligne avec un axe longitudinal (L) du manche (2),
- est relié de manière amovible au manche (2), et
- comprend une brosse conique (9) qui est rotative autour de cet axe longitudinal (L) du manche (2),
**caractérisé en ce que** :
- le dispositif comprend en outre une protection contre les surcharges disposée entre l'organe de nettoyage (8) et l'entraînement (4), et
- l'entraînement (4) peut tourner en continu dans deux directions et est commandé par un commutateur (11).

2. Dispositif selon la revendication 1, **caractérisé en ce que** la protection contre les surcharges comprend un accouplement à glissement (12).

3. Dispositif selon la revendication 2, **caractérisé en ce que** l'accouplement à glissement (12) est un accouplement magnétique.

4. Dispositif selon la revendication 3, **caractérisé en ce que** l'accouplement à glissement (12) comprend un aimant (13) relié de manière entraînable à l'entraînement (4) et un suiveur (14) en matériau magnétisable relié à l'élément de nettoyage (8).

5. Dispositif selon la revendication 4, **caractérisé en ce que** l'aimant (13) est un aimant permanent.

6. Dispositif selon la revendication 4 ou 5, **caractérisé en ce que** l'aimant (13) est relié à l'arbre d'entraînement (7).

7. Dispositif selon l'une quelconque des revendications précédentes, **caractérisé en ce que** l'élément de nettoyage (8) comprend un fil dentaire (22) et une poulie autour de laquelle le fil dentaire (22) est enroulé est reçue dans ou sur la poignée (2).

8. Dispositif selon la revendication 7, **caractérisé en ce que** la poulie est reliée à l'arbre d'entraînement (7).

9. Dispositif selon les revendications 7 ou 8, **caractérisé en ce que** la poulie est fabriquée au moins partiellement à partir d'un matériau magnétisable et fonctionne comme un suiveur (14).

10. Dispositif selon la revendication 9, **caractérisé en ce que** l'organe de nettoyage (8) et le suiveur (14) sont amovibles dans leur ensemble.

11. Dispositif selon l'une quelconque des revendications précédentes, **caractérisé en ce que** l'entraînement (4) comprend un moteur électrique (5) et une batterie rechargeable (6).

12. Dispositif selon la revendication 11, **caractérisé en ce que** la batterie rechargeable (6) est connectée à une connexion USB (27) sur la poignée (2).
